# EUROPEAN PATENT SPECIFICATION

(11) **EP 1 052 717 B1**
(45) Date of publication and mention of the grant of the patent: **31.07.2002**
(21) Application number: 99107418.8
(22) Date of filing: 26.04.1999
(51) Int. Cl.: H01M 8/04

(54) **Fuel cell system**
Brennstoffzellenanlage
Système de piles à combustible

(43) Date of publication of application: 15.11.2000
(73) Proprietor: Kabushiki Kaisha Equos Research, Tokyo 101 (JP)
(72) Inventor: Horiguchi, Munehisa, Sapporo, Hokkaido (JP); Takada, Noriyuki, Sapporo, Hokkaido (JP)
(74) Representative: VOSSIUS & PARTNER

(56) References cited:
- EP-A- 0 301 757
- WO-A-98/45889
- WO-A-99/05740
- US-A- 5 432 020
- US-A- 5 645 950
- NGUYEN T V ET AL: "A WATER AND HEAT MANAGEMENT MODEL FOR PROTON-EXCHANGE-MEMBRANE FUELS CELLS" JOURNAL OF THE ELECTROCHEMICAL SOCIETY, vol. 140, no. 8, 1 August 1993 (1993-08-01), pages 2178-2186, XP000403645 ISSN: 0013-4651
- PATENT ABSTRACTS OF JAPAN vol. 1995, no. 122, 26 December 1995 (1995-12-26) & JP 07 220746 A (MITSUBISHI HEAVY IND LTD), 18 August 1995 (1995-08-18)

## Description

The present invention relates to a fuel cell system and more particularly to a fuel cell system using a proton exchange membrane as an electrolyte.

A proton exchange membrane fuel cell comprises a proton exchange membrane (PEM) between two electrodes, that is a cathode to which an oxidizing gas is supplied and an anode to which fuel gas is supplied. PEM acts as an electrolyte and transports therethrough hydrogen ions obtained at the anode of the fuel cell toward the cathode, in the form of proton (H⁺). Each of the electrodes comprises a catalyst layer deposited on a porous base member through which the reactant gas is supplied. Mounted externally of each electrode is a separator or connector plate with grooves permitting the reactant gas to be introduced into the electrode at a constant flow rate. An excessive gas which has not been consumed by the fuel cell reaction is exhausted to the open air through the grooved separator. The electricity generated by the energy conversion reaction at the anode is collected at the electrode porous base member and transported to the outside of the fuel cell system through the separator. In actual application, the system includes a plurality of fuel cells which are stacked in series with the separator being interposed between adjacent fuel cells.

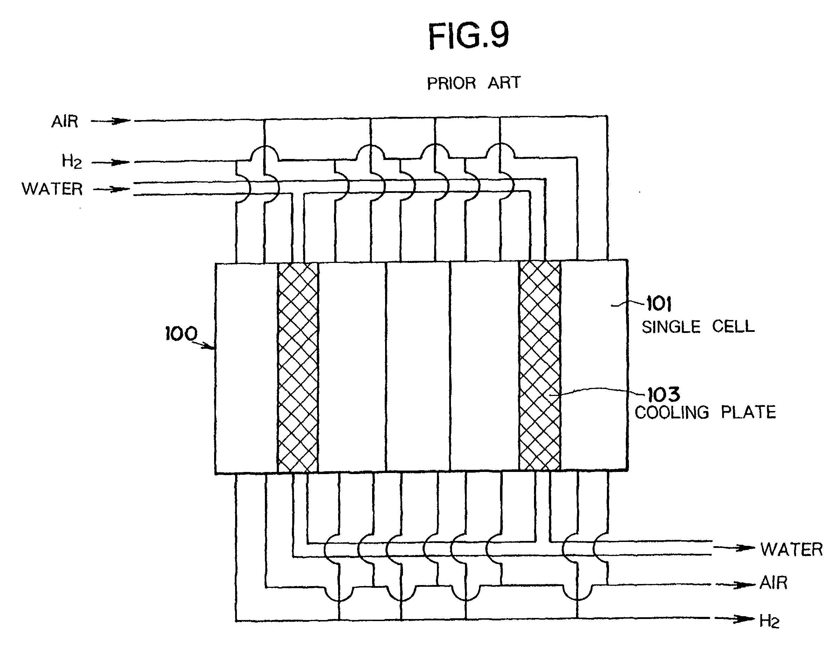

Since the fuel cell generates heat in correspondence to the electric power generated, a fuel cell stack 100 usually includes cooling plates 103 between fuel cells 101, 101 at predetermined intervals, as shown in Fig.9. Each cooling plate has a passage of a cooling medium such as air and water to prevent excessive overheat of fuel cells 101 in operation.

Proton is hydrated when being transferred through PEM electrolyte, so that PEM tends to be dehydrated as the fuel cell reaction proceeds. PEM must always be properly humidified to prevent decrease of ion-conductivity and energy conversion efficiency. In the conventional designs, hydrogen gas is humidified by suitable means which, in turn, humidify PEM when it is supplied to the anode.

Various attempts have also been proposed to humidify an air to be supplied to the cathode. Since the cathode of the fuel cell in operation has been heated to 80 °C, for example, the air of a normal temperature should be preheated by a humidifier so that its saturated vapor becomes consistent with the ambient vapor condition of the cathode. Such humidifier that is required to have water supplying function and air preheating function can not be simple in construction.

In Japanese patent un-examined publication No. 7-14599, there is provided a water injection nozzle to inject a necessary quantity of water into an air introducing pipe through which an air is supplied to the cathode of the PEM fuel cell. Since the nozzle is located upstream of a compressor, a liquid water injected from the nozzle is evaporated when subjected to heat generated by the compressor. Thus, the cathode is humidified by vapor, not by liquid water.

In the fuel cell system of Japanese patent un-examined publication No. 9-266004, a discharge gas from the anode containing hydrogen gas which has not been consumed during the anodic reaction is introduced into the cathode where the unconsumed hydrogen gas in the discharge gas is combusted with oxygen to generate water, which well humidifies PEM electrolyte. In this system, there is no need to install a humidifier for humidifying an air to be supplied to the cathode.

During operation of the fuel cell system, electron produced at the anode is moved to the cathode where it reacts with oxygen in the air or any other oxidizing gas supplied thereto to produce water. Accordingly, in accordance with the conventional recognition in the art, there is a greater need to humidify hydrogen gas to be supplied to the anode, than at the cathode where water can at least partially be self-sustaining.

As a result of the inventors' repeated tests and investigation, however, it has been found that water produced at the cathode permeates through PEM electrolyte toward the anode, which makes it unnecessary to humidify hydrogen gas to be supplied to the anode. On the other hand, a water quantity of PEM electrolyte at the cathode side tends to decrease by contacting the air flow to the cathode. Such finding is contradictory to the conventional knowledge and has been first recognized by the present inventors.

It is an object of the present invention to provide a fuel cell system, based on the above-described finding, which is capable of maintaining a proton exchange membrane to be in a suitable moisture condition.

Another object of the present invention is to provide a fuel cell system which is simple in construction, small in size, easy to install and, therefore, particularly suitable to be mounted on a vehicle.

According to an aspect of the present invention there is provided a fuel cell system in which water is supplied to the surface of the cathode not in a vapor state but in a liquid state. Thus, the fuel cell system of the present invention comprises one or more of fuel cells each having an anode, a cathode and an electrolyte membrane interposed between the anode and the cathode; first gas supplying means for supplying a first gas including fuel gas to the anode; second gas supplying means for supplying a second gas including oxygen to the cathode; and liquid water supplying means for supplying liquid water to the surface of the cathode. Liquid water may be sprayed onto the surface of the cathode. The supply of liquid water may be done intermittently. In a preferable embodiment, a nozzle is provided to spray or inject liquid water to the surface of the cathode.

With this fuel cell system, liquid water supplied to the surface of the cathode takes latent heat from the air around the cathode to prevent evaporation of water from the electrolyte membrane. Thus, the electrolyte membrane is prevented from being excessively dried and maintained to be in a suitable moisture condition, which improves performance and durability of the fuel cell system. The supply of liquid water to the surface of the cathode is also effective to cool the cathode and thus the fuel cell stack, which makes it unnecessary to install cooling plates in the stack as in the prior art design.

Preferably, liquid water is sprayed onto the surface of the cathode since it is more effective to take latent heat from the air. Although the fuel cell system of Japanese patent un-examined publication No. 7-14599 discloses the water injection nozzle at the air supplying side, the sprayed liquid water is evaporated before entering the cathode. The concept of supplying liquid water to the cathode is not at all taught by this prior art. The present invention does not need pre-heating of the air to be supplied to the cathode, which function has been required in the humidifier of the conventional system.

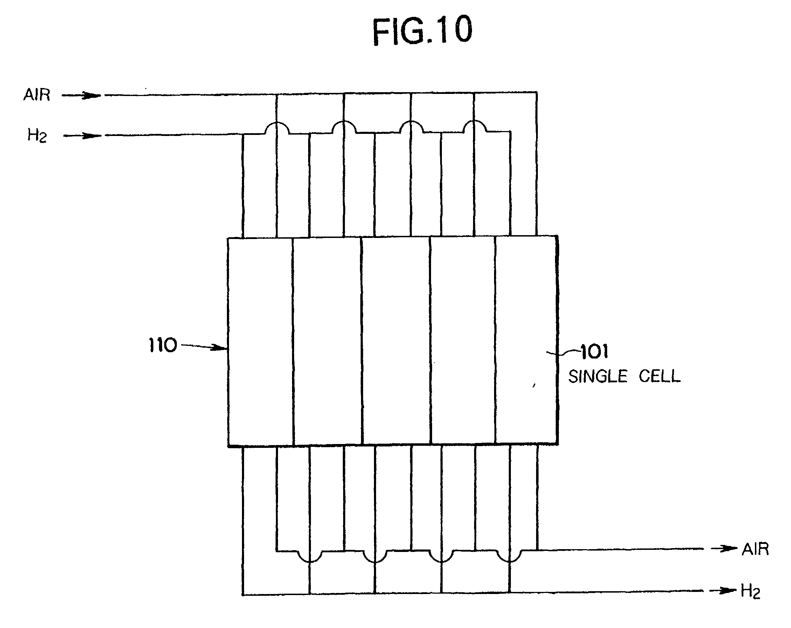

The supply of liquid water to the cathode is particularly effective to cool the cathode which has been heated to a temperature higher than at the anode when the fuel cell system is running. This simplifies the system structure and reduces the overall weight because the fuel cell stack 110 does not need the cooling plates 103 (Fig.9) as in the conventional system, as shown in Fig.10.

The supply of liquid water may be continuous or intermittent. When liquid water is intermittently supplied, a lower electric power is sufficient to drive a pump or any suitable devices to convey liquid water from a water tank. In the conventional system in which the air to be supplied to the cathode is humidified with vapor, it have been necessary to continuously generate vapor and pre-heat the air to a predetermined temperature, which needs much greater electric power to drive the humidifying device.

The present invention is particularly practical when applied to a fuel cell system in which water generated by the fuel cell reaction is fed to the electrolyte membrane and which has no special equipment for humidification of the electrolyte membrane. In this type fuel cell system, a suitable moisture condition of the electrolyte membrane is maintained only by the reactant water generated at the cathode by combustion or reaction of a fuel gas and oxygen. There is no need to constantly supply water to the cathode because of the presence of the reactant water at the cathode. The nozzle is operated to spray liquid water to the cathode only when a moisture condition at the surface of the electrolyte membrane facing the cathode is decreased to below a predetermined critical level to decrease the fuel cell performance. This should be compared with the conventional system in which the humidifying device is always driven to humidify the air to be supplied to the cathode. Accordingly, the fuel cell system of the present invention in which no humidifying device is employed has the advantage of minimizing the drive energy in the system.

When the fuel cell system of the present invention should be started, in preferable operation, liquid water is injected to the cathode before the fuel gas is first supplied to the anode, and the fuel cell system is connected to an external device to which an electricity generated should be supplied (a vehicle drive motor, for example) after the output from the fuel cell system reaches a predetermined level as the reaction proceeds. If the fuel cell system is out of operation for a long period of time, the air remaining around the cathode could possibly be permeated through the electrolyte membrane toward the anode, which might be reacted with the fuel gas to cause explosion to damage the membrane. To prevent this, the cathode is preferably cooled by the spraying liquid water before the fuel gas is supplied to the anode. Such operation is also effective to quickly humidify the membrane which may have been dried up after a long period standstill. Liquid water directly sprayed onto the surface of the cathode can be smoothly absorbed into the dry membrane because of high osmotic pressure. The liquid water quantity at the initial stage operation of the fuel cell system should preferably be somewhat larger than that at the normal operation to keep the suitable moisture condition of the electrolyte membrane.

The foregoing and other objects and features of the present invention can be apparent from the following description when read in conjunction with the accompanying drawings in which:
Fig.1 is a schematic view diagrammatically showing the structure of a fuel cell power generating apparatus embodying the present invention;
Fig.2 is a schematic view showing the single fuel cell structure in the apparatus shown in Fig.1;
Fig.3 is a block diagram of the control system of the apparatus shown in Fig.1;
Fig.4 is a flowchart showing liquid water supplying operation of the apparatus shown in Fig.1;
Fig.5 is a graph showing relationship between the spray water quantity and the water pressure;
Fig.6 is a flowchart showing the start-up operation of the apparatus shown in Fig.1;
Fig.7 is a graph showing relationship between the water spray in different ways and the resulting fuel cell outputs;
Fig.8 is a graph showing relationship between the fuel cell outputs and the spray water temperatures;
Fig.9 is an explanatory view showing the prior art fuel cell stack structure;
Fig.10 is an explanatory view showing the fuel cell stack structure according to the present invention;
Fig.11 is a table showing the test conditions and results from which the present invention provided improved cooling capacity;
Fig.12 is a graph showing relationship between the temperature difference between inside and outside of the fuel cell and natural heat radiation, which was determined by the test results shown in Fig.11;
Fig.13 is a graph showing relationship between the spray water quantity and the cooling capacity, which was also determined by the test results shown in Fig.11;
Fig.14 is a graph showing relationship between the spray water quantity and the cooling capacity by sensitive heat, which was also determined by the test results shown in Fig.11;
Fig.15 is a graph showing relationship between the spray water quantity and the cooling capacity by latent heat, which was also determined by the test results shown in Fig.11; and
Fig.16 is a graph showing relationship between the discharge gas temperature and the cooling capacity by latent heat, which was also determined by the test results shown in Fig. 11.

Fig. diagrammatically shows the structure of a fuel cell power generating apparatus 1 according to an embodiment of the present invention, which comprises in general a proton exchange electrolyte fuel cell 10, a fuel gas supply system 20, an air supply system 30 and a water supply system 40.

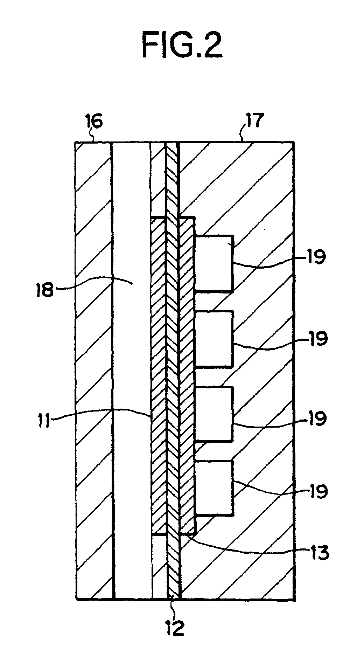

Shown in Fig.2 is a single fuel cell structure which, as known in the art, comprises an air electrode or cathode 11, a fuel electrode or anode 13 and an electrolyte membrane 12 interposed therebetween. In actual application, a plurality of the fuel cells are layered one another to form a fuel cell stack. An air intake manifold 14 with a water injection nozzle 41 and an air outlet manifold 15 are mounted above and beneath cathode 11, respectively. Air intake manifold 14 is relatively long in height which is enough to inject water from nozzle 41 onto the whole surface of cathode 11. Water from nozzle 41 may be discharged through air outlet manifold 15.

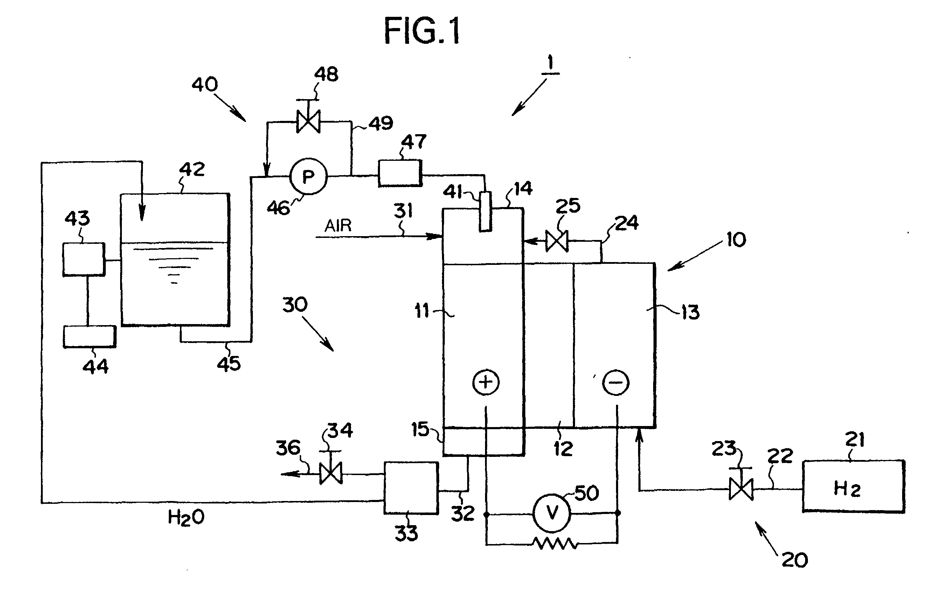

In a modified design, nozzle 41 may be mounted to the side wall of air inlet manifold 14. In this modification, water injected from nozzle 41 may be dispersed to the entire surface area of cathode 11, which allows air inlet manifold 14 to be shortened rather than that shown in Fig.1 which is provided with nozzle 41 at the top thereof, resulting in reduction in size of fuel cell 10.

As shown in Fig.2, a single fuel cell unit comprising cathode 11/membrane 12/anode 13 is formed in a thin film, which is held between a pair of carbon connector plates or separator 16, 17. Connector plate or separator 16 facing toward cathode 11 is provided with a plurality of grooves 18 extending vertically through air intake manifold 14 and air outlet manifold 15. Grooves 18 not only acts as air flow passages but also permits water from nozzle 41 to drop from the top to the bottom of cathode 11.

On the other hand, connector plate 17 facing anode 13 is provided with a plurality of grooves 19 for passing a hydrogen gas therethrough, which extend horizontally in the embodiment shown but may extend vertically, that is, in parallel with air flow passage grooves 18.

Cathode 11 to which water is supplied from nozzle 41 must be made of water-resistant material. The material forming cathode 11 is also required to have an improved water-repellent property to prevent water deposition on the surface thereof which should decrease the surface area. A typical example of suitable material forming cathode 11 is a carbon cloth to which PTFE is immersed. Electrolyte membrane 12 may be Nafion (Trademark of Dupon) membrane of a suitable thickness as far as it permits water generated at cathode 11 to permeate therethrough toward anode 13. Anode 13 may be made of any desired material but it is practically preferable that the same material as of cathode 11 is also used for anode 13.

Each one surface of cathode 11 and anode 13 facing electrolyte membrane 12 is coated with a thin film of a predetermined even thickness of platinum group catalyst which promotes fuel cell reaction between hydrogen in the fuel gas and oxygen in the air. Coating of the catalyst film may be done by sputtering followed by hot-press, for example.

A hydrogen source 21 of hydrogen gas supply system 20 is a hydrogen gas bottle 21 of a hydrogen storing alloy such as LaNis, TiFe, ZrMn2, Mg2Ni in this embodiment, from which hydrogen gas is supplied to anode 13 of fuel cell 10. For example, LaNi₅ is known to provide endothermic reaction LaNi₅H₆ → LaNi₅ + 3H₂, when heated to about 50-80 °C, causing hydrogen gas to be produced by about 300 liters per hour. Another example of hydrogen source 21 comprises a rectifier that rectifies and transforms a raw material such as water/methanol mixture liquid into a hydrogen-enriched gas which is supplied to a tank and stored therein. When apparatus 1 is installed stationary in a room, hydrogen source 21 may be a fixed gas conduit with a regulation valve.

A discharge gas from anode 13 can be fed through a discharge gas passage 24 with a valve 25 to air intake manifold 14 where it is mixed with the air. Valve 25 regulates the feed rate of the discharge gas from anode 13 to manifold 14. In a modification, there is no discharge gas passage 24 in which case all of the discharge gas from anode 13 is exhausted to the open air.

Although not shown in the drawings, there is mounted a blower that introduces the atmospheric air into air intake manifold 14 of cathode 11 through an air flow passage 31. As described before, the air introduced into air intake manifold 14 passes through vertically extending grooves 18 throughout the entire surface of cathode 11. A discharge gas from cathode 11 is fed through a passage 32 to a concentrator 33 where water is separated from the discharge gas, and exhausted or circulated through a passage 36 with a control valve 34 that controls the discharge rate. Passage 36 may be connected to passage 31 for re-entry of the remaining gas into cathode 11. Valve 34 may be omitted, in which case all of the discharge gas from cathode 11 is exhausted to the open air.

Water separated from the discharge gas is fed to a water tank 42. The water level in tank 42 is detected by a water level sensor 43 which outputs a signal to an alarm 44 when the water level in tank 42 decreases to below a predetermined level so that alarm provides some visible and/or audible warning to the operator.

In water supply system 40 of this embodiment, a water supply passage 45 having a pump 46 and a water pressure sensor 47 is connected between tank 42 and nozzle 41 so that water in tank 42 can be supplied to cathode 11. More particularly, a water conduit from tank 42 is connected to nozzle 41 via a pump 46. a water pressure sensor 47 and a water spray pressure control valve 48. Water from tank 42 is regulated by control valve 48 to have an optimum pressure which is sprayed into air intake manifold 14 through nozzle 41. The rate of injection of water from nozzle 41, own weight of the sprayed water and the air flow in air intake manifold 14 are selected and combined with each other to allow the sprayed water to disperse over the entire surface of cathode 11.

Water on the surface of cathode 11 will take latent heat away from the ambient air and the surface itself to evaporate, which not only prevent evaporation of water in electrolyte membrane 12 but also function to cool cathode 11. To cool cathode 11 is effective to prevent damage from electrodes 11, 13 and membrane 12 due to reaction of the supplied water and the remaining oxygen to cause combustion or explosion which could occur during the initial stage of operation of fuel cell power generating apparatus 1. A voltmeter 50 measures a voltage between cathode 11 and anode 13.

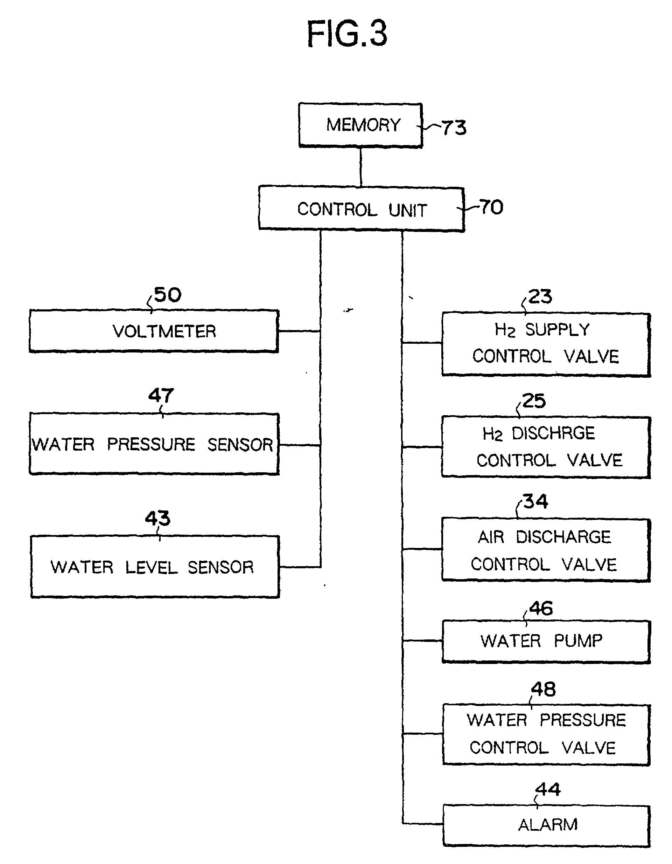

Operation of fuel cell apparatus 1 of this embodiment will be described in reference to Fig.3-Fig.6. A control unit 70 comprising a microprocessor and a memory 73 are installed in a control box (not shown in Fig.1) of apparatus 1. Memory 73 stores control programs that governs operation of control unit 70. Various parameters and look-up tables to be used in control procedures executed by control device 70 are also stored in memory 73.

Hydrogen gas supply system 20 will be operated as follows. During the initial stage of operation of apparatus 1, hydrogen discharge valve 25 remains closed, and hydrogen gas supply control valve 23 provided in a hydrogen gas supply passage 22 is adjusted to allow hydrogen gas of a predetermined concentration below the explosive limit to be supplied from source 21 to anode 13.

While apparatus 1 is kept running with valve 25 closed, a partial pressure of hydrogen in the gas consumed at anode 13 is gradually lowered under the influence of nitrogen and oxygen in the air supplied to cathode 11 and water generated at cathode 11 which permeates through electrolyte membrane 12, which degrades and unstabilize the electric power output from fuel cell 10. Accordingly, valve 25 is opened in accordance with a prescribed valve control program to exhaust the deteriorative gas from anode 13 to refresh the gas in anode 13. The valve control program is stored in memory 73 and read out therefrom by control unit 70 to open or close valve 25 and control the degree of openness of valve 23. In a particular embodiment, the program is prepared to open valve 25 over a predetermined period (1 second, for example) when the output voltage measured by voltmeter 50 decreases to below a predetermined critical value. In another embodiment, the program may be determined to intermittently open and close valve 25 with a predetermined interval which is substantially the same or slightly shorter than an experimentally determined period of time in which the output voltage should begin to decrease since the start-up of fuel cell 10.

Air supply system 30 will operate as follows. The atmospheric air is supplied through air passage 31 to air intake manifold 14 with a predetermined pressure. A portion of the exhaust gas from cathode 11 is drawn to the outside of the system depending on the degree of openness of valve 34 which is controlled by control unit 70 in accordance with a predetermined air discharge control program in memory 73. In a particular embodiment, however, valve 34 may have a fixed degree of openness because the water balance in fuel cell 10 is regulated by water supply system 40 in a manner to be described below.

In operation of water supply system 40, water is pumped up by pump 46 from tank 42 and controlled by valve 48 to have an optimum pressure, which, in the form of water droplets, is sprayed onto the surface of cathode 14 by means of nozzle 41 mounted to air intake manifold located near cathode 11. The water supply quantity is controlled by control unit 70 in accordance with a predetermined water supply control program in memory 73.

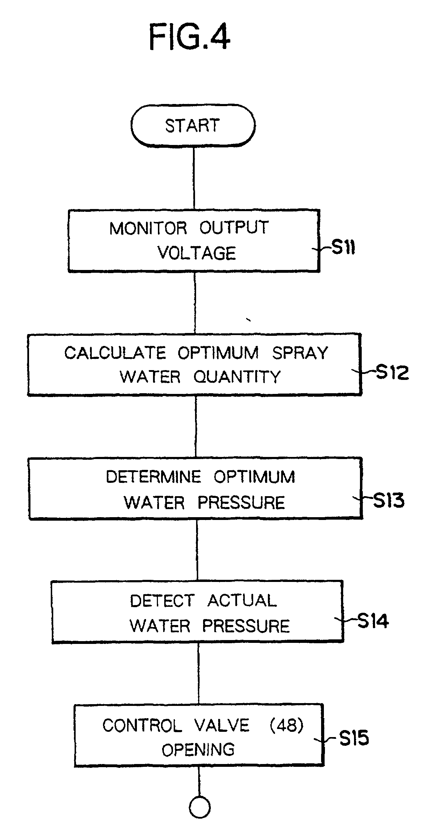

Referring now specifically to the flowchart of Fig.4, in this embodiment, control unit 70 monitors the output voltage between cathode 11 and anode 13 measured by voltmeter 50, at step S11, to calculates an optimum spray water quantity depending on the measured output voltage, at S12. This calculation may be done by using a predetermined formula or look-up table in memory 73. Preferably, the optimum spray water quantity is determined so as to maintain a proper moisture condition of electrolyte membrane 12 and a suitable temperature range of fuel cell 10. As will be described hereinlater, fuel cell 10 may be effectively cooled by utilizing latent evaporation heat of water, even with a relatively small spray water quantity. In normal control, water supply system 40 starts up when the output voltage decreases to below a predetermined value or when the output voltage varies in a range greater than a predetermined width.

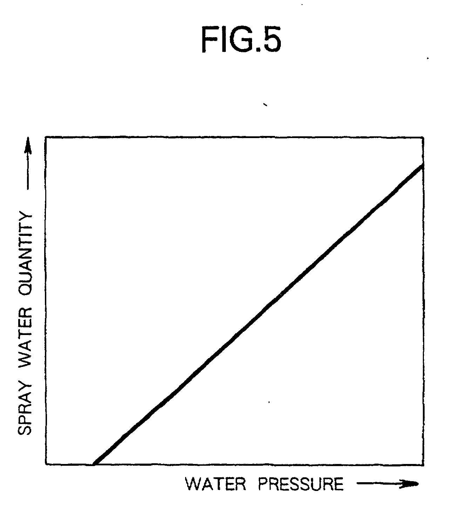

Then, at step S13, control unit 70 calculates an optimum water pressure based on the optimum spray water quantity thus determined. Since there is a proportional relationship between the spray water quantity and the water pressure, an example of which is shown in Fig.5, some formula or look-up table representing this relationship is stored in memory 73. In this embodiment, the opening degree of valve 48 on a circulating passage 49 is adjusted to control the pressure of water sprayed through nozzle 41, while supplying a constant drive power to driving pump 46. In this manner of control, the spray water pressure decreases as valve 48 has a greater opening degree. Accordingly, at step S14, control unit 70 performs the feedback control in which it controls the opening degree of valve 48 so that the actual water pressure measured by a water pressure sensor 47 becomes identical to an optimum spray water pressure which has been determined at S13. In another control, water supply system 40 is periodically driven with a predetermined constant water pressure over a predetermined time interval (5-10 seconds, for example).

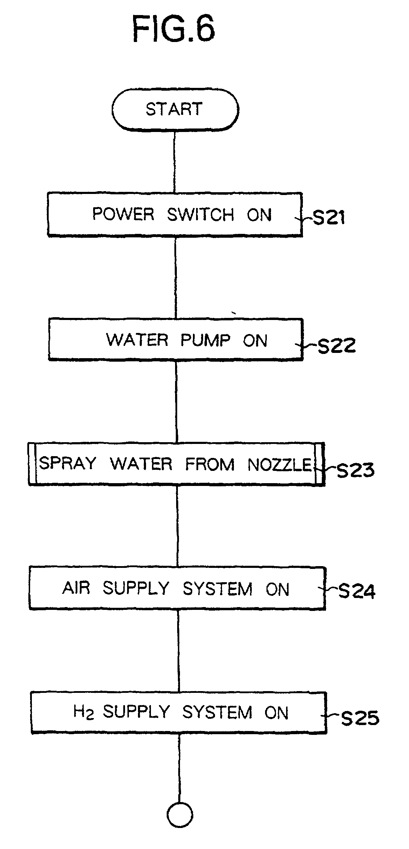

Fig.6 is the flowchart showing the control procedure at the start-up of apparatus 1. When apparatus 1 is energized by operating a power switch (not shown) at step S21, water pump 46 is also energized at step S22. Water is sprayed from nozzle 41 in a given quantity at step 23. Normally, the water spray quantity is regulated by adjusting the opening degree of valve 48 as in a manner having been described in connection with the flowchart of Fig.4. To prevent fuel cell 10 from damage which could occur due to the aforementioned extraordinary reaction, water in a quantity greater than that in the normal control is to be sprayed to cathode 11. Then, air supply system 30 and hydrogen supply system 20 are energized successively at steps S24 and S25. After the output voltage between cathode 11 and anode 13 reaches a predetermined level, it is actually supplied to an external device.

Regarding the time when hydrogen supply system 20, air supply system 30 and water supply system 40 are to be started up, air supply system 30 may be started up before or after start-up of water supply system 40. Hydrogen supply system 25 may be started up before start-up of air supply system, in which case step S25 precedes step S24 in the flowchart of Fig.6. However, it is absolutely necessary to start water supply system 40 before hydrogen supply system 20 begins to run. Because there is air in apparatus 1 irrespective of operation of air supply system 30, if hydrogen should be supplied while electrolyte membrane 12 is not yet sufficiently moistured, an extraordinary combustion could occur as having been described hereinbefore, which generates a lot of heat at a time to quickly raise the temperature of fuel cell 10, which could not be cooled down to the normal operation temperature by a normal cooling equipment attached thereto, causing damage to catalyst and/or electrolyte membrane 12. To prevent such a damage, it is necessary to spray water onto cathode 11 before hydrogen is supplied to anode 13. This mode of operation will promote membrane 12 to be properly moisturized and also utilize the generated heat for evaporation of the sprayed water.

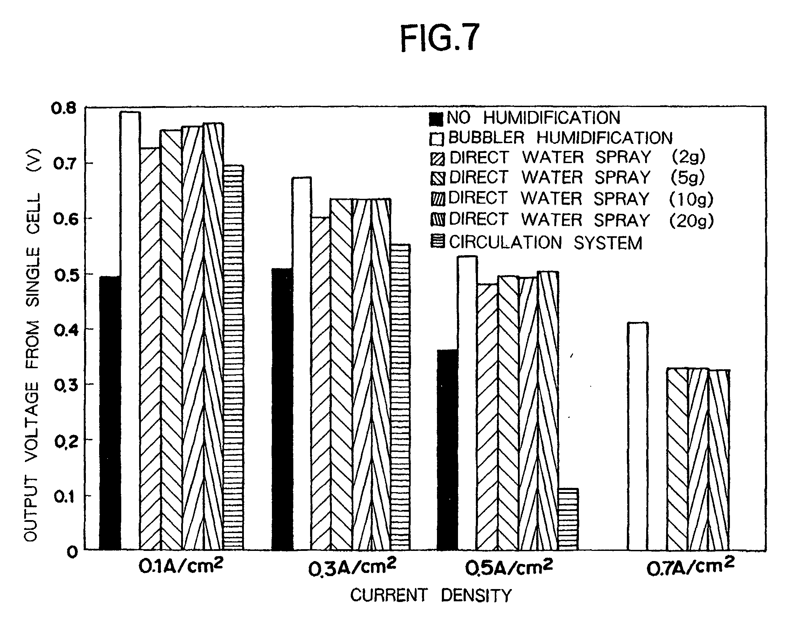

Fig.7 shows relationship between the water supply in different ways and the resulting output voltage from the 200W class fuel cell stack. The output voltages in Fig.7 indicate values after 15 minutes from the start-up of fuel cell 10. Shown on the abscissa are current densities of the load between cathode 11 and anode 13. In examples referred to by "no humidification" no water is supplied in which case hydrogen gas introduced into anode 13 is not fed to cathode 11 but exhausted to the open air. In examples referred to by "bubbler humidification", vapor is incorporated into the air to be supplied to cathode 11 and the air is heated to approximately 65 °C as in the conventional fuel cell operation. Referred to by "direct water spray" are examples of the present invention in which 2g, 5g, 10g and 20g water of normal temperature is sprayed onto the surface of cathode 11 per minute and per cell.

As can be noted from Fig.7, the examples of the present invention show relatively high output voltages comparable with those of the conventional examples having the humidifying device. The minimal level of the spray water quantity which deemed to be still effective to generate the output voltage comparable with the conventional fuel cell will vary case by case depending upon the type and design of the fuel cell. Approximately 30% of the total water quantity that can be evaporated by air flowing through cathode 11 could be deemed as a minimum quantity of the sprayed water in usual case.

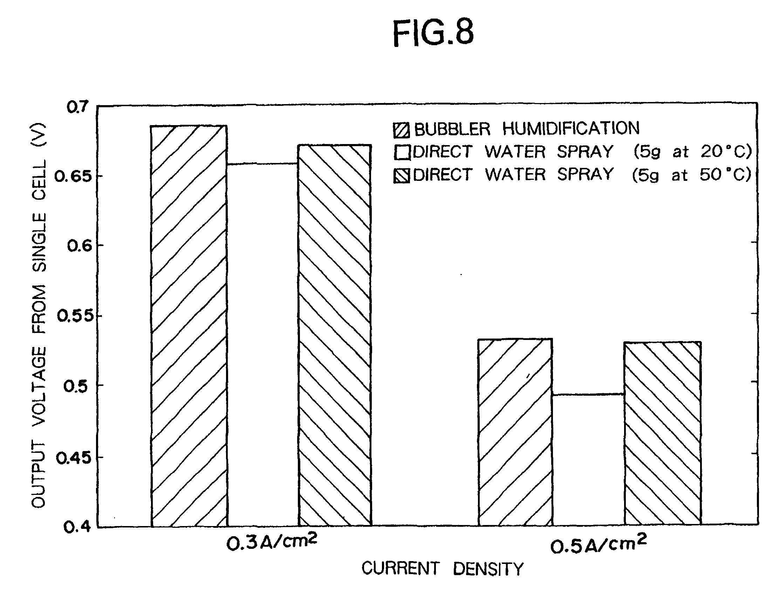

Fig.8 shows relationship between the output voltage and the temperature of the spray water. It becomes apparent that the output voltage can be increased to a level substantially identical to those of the conventional examples having the humidifying device, when raising the temperature of the spray water. Accordingly, it is preferable to preheat water to be supplied to cathode 11. The spray water should preferably be in a range of 40-60 °C, more preferably be in a range of 45-55 °C, still more preferably be approximately 50 °C.

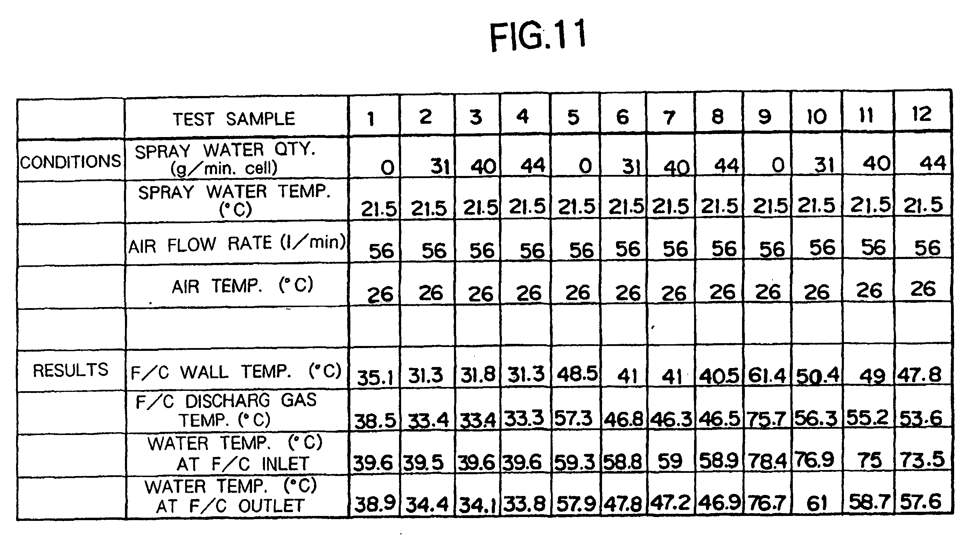

The following tests were made to confirm that the water spray to the cathode is also effective to cool the fuel cell. The test apparatus was similar to that shown in Fig.9 but has nine cells 101. Water having temperature of 40 °C, 60 °C or 80 °C was caused to pass through cooling plates 103 to heat fuel cell stack 100. Temperature of fuel cell stack 100 after water spraying was measured on different conditions, which are shown, together with the test results, in a table of Fig.11.

In test species No.1-No.4, water of 40 °C passed through cooling plates 103 to create a false operating condition in which fuel cell stack 100 operates at 40 °C, and water in different quantities were sprayed onto the cathode. In test species No.5-No.8, water of 60°C passed through cooling plates 103 to create a false operating condition in which fuel cell stack 100 operates at 60 °C, and water in different quantities were sprayed onto the cathode. Likewise, in test species No.9-No.12, water of 80 °C passed through cooling plates 103 to create a false operating condition in which fuel cell stack 100 operates at 80 °C, and water in different quantities were sprayed onto the cathode.

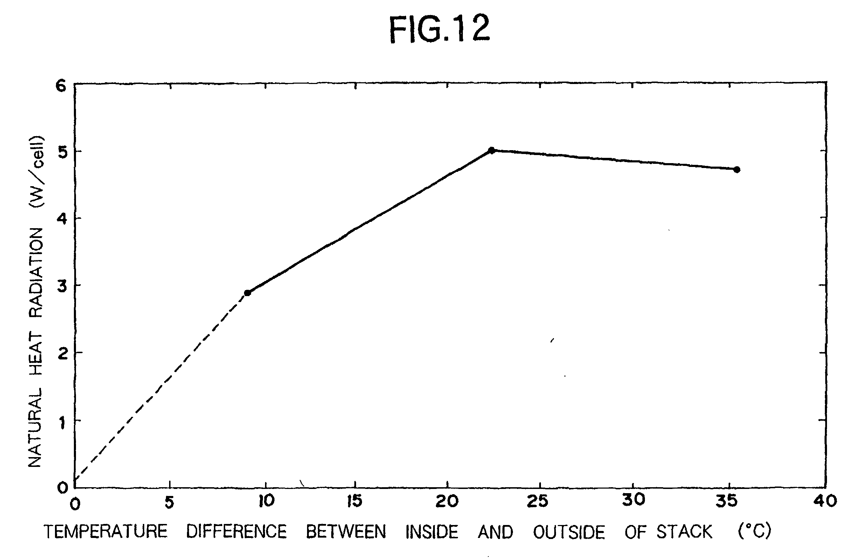

Fig.12 shows relationship between the temperature difference between the fuel cell and the atmospheric air and the natural heat radiation which was determined by the test results shown in Fig.11. More specifically, data was obtained from the difference between water temperature at the inlet and at the outlet of cooling plates 103 in test species No.1, No.5 and No.9 in which no water was sprayed onto the cathode. These test results indicate how the fuel cell stack having no cooling means is cooled only by natural heat radiation. As shown in Fig.12, the natural heat radiation in the test fuel cell stack was 5w at the utmost per cell. It is believed that the natural heat radiation will be decreased as the difference between the fuel cell temperature and the atmospheric air temperature becomes small.

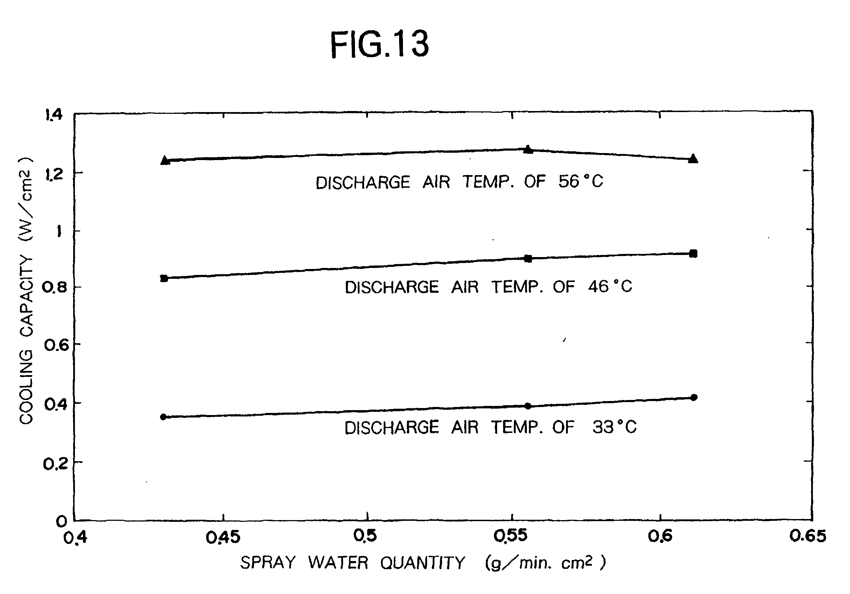

Fig.13 shows relationship between the spray water quantity and the cooling capacity, which was also determined by the test results shown in Fig.11. As shown, no substantial change in the cooling capacity could be recognized even when the spray water quantity increases. Rather, it is concluded that the discharge gas temperature has a greater influence on the cooling capacity.

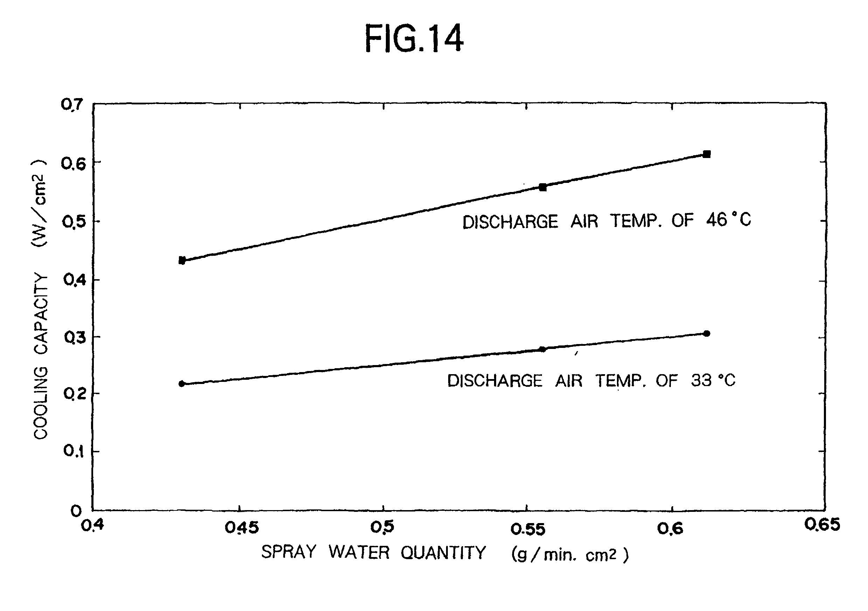

Fig.14 shows relationship between the spray water quantity and the cooling capacity by sensitive heat, which was also determined by the test results shown in Fig. 11. The sensitive heat means heat to be consumed or taken away from the fuel cell stack when the sprayed water (26 °C) is raised to the respective discharge gas temperature (33 °C and 46 °C in Fig.14) while the sprayed water is kept in a liquid state, that is, with no evaporation. As shown, though the cooling capacity by sensitive heat is gradually increased with the spray water quantity, but rather, the discharge gas temperature has a greater influence on the cooling capacity by sensitive heat of the sprayed water.

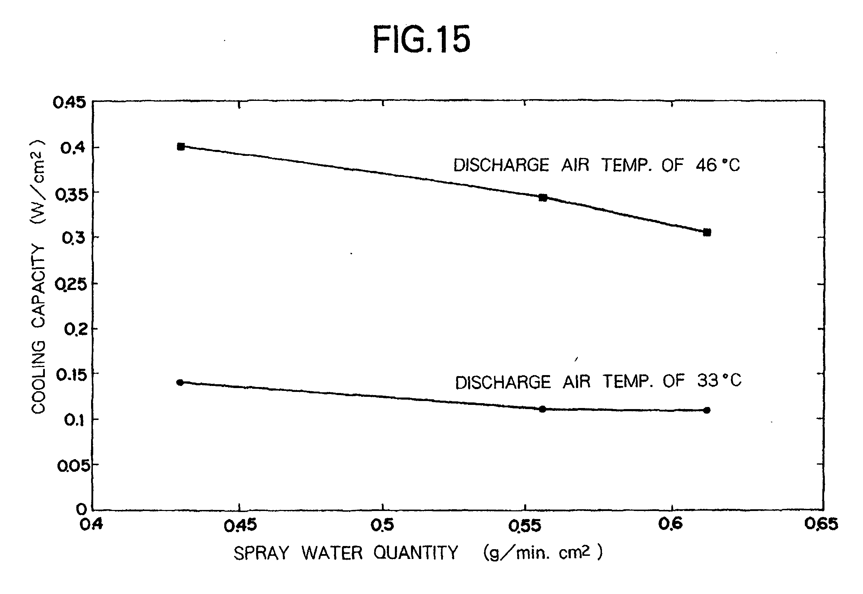

Fig.15 shows relationship between the spray water quantity and the cooling capacity by latent heat, which was also determined by the test results shown in Fig.11. The latent heat means heat to be consumed or taken away from the fuel cell stack by evaporation of the sprayed water. As shown, the cooling capacity by latent heat tends to be increased as the spray water quantity decreases. Still, the discharge gas temperature has a greater influence on the cooling capacity by latent heat of the sprayed water.

The graphs shown in Figs.13-15 show that liquid water sprayed onto the surface of cathode 11 has cooling capacity by sensitive heat (Fig.14) and cooling capacity by latent heat (Fig.15), the sum of which is shown as the total cooling capacity at the ordinate of the graph in Fig.13. As a result of the inventors' extensive experimentation regarding the cooling capacity of the water spray in still smaller quantities than those shown in Figs.13-15, similar results have been obtained. More specifically, smaller quantity of the spray water will decrease the cooling capacity by sensitive heat but compensationally increase the cooling capacity by latent heat, to obtain substantially the same total cooling capacity, as noted from the graph in Fig.13. The quantity of water to be sprayed in a particular design of apparatus 1 should be determined so as to provide the maximum cooling capacity of latent heat, which actually depends on the output volume from fuel cell 10, its size, its operating temperature, etc. In any way, since the spray water quantity is not critical as above described, there is no need to spray water in a large quantity because it is of course undesirable in view of size and cost of water supply system 40.

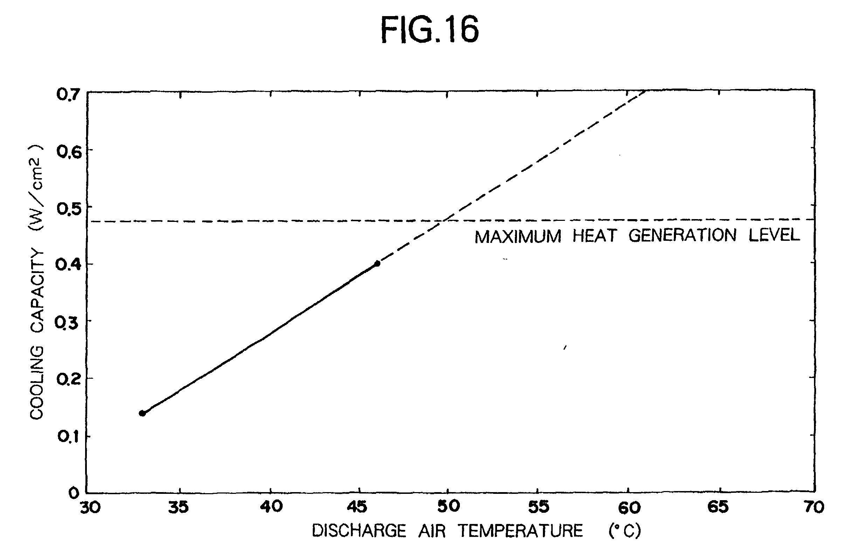

Fig.16 shows relationship between the discharge gas temperature and the cooling capacity by latent heat, which was also determined by the test results shown in Fig. 11. The dotted line indicates the anticipated maximum heat generation level per unit area (cm²) of the fuel cell stack in operation. The cooling capacity obtained with the discharge gas temperature ranging from 33 °C to 46 °C shown by a solid line in Fig.16 do not reach the maximum level of heat generation of the fuel cell stack. It can be observed that the cooling capacity by latent heat of the sprayed water will increase proportionally with the discharge gas temperature. Accordingly, it should be concluded that when the fuel cell stack operates at a temperature higher than 50 °C, the cooling capacity by latent heat of the sprayed water exceeds the maximum heat generation level of the fuel cell stack, that is, a sufficient cooling capacity could be obtained during operation of the fuel cell stack. This means that the fuel cell stack of the present invention in which water is sprayed onto the cathode does not require cooling plates 103 and may have a simple stack arrangement as shown in Fig.10, which provides higher efficiency and lower weight of the fuel cell stack.

As having been described in detail, in accordance with the present invention water sprayed onto the cathode surface takes latent heat away from the air therearound to prevent evaporation of water in the electrolyte membrane which, therefore, remains to be in a desired moisture condition. Water sprayed onto the cathode surface will also be effective to cool the fuel cell and the fuel cell stack to control the temperature of the fuel cell stack in operation, which means that no additional cooling medium needs to be passed therethrough. The fuel cell system of the present invention is simple in construction, manufactured at lower costs and provides improved capacity and durability.

Although the present invention has been described in conjunction with specific embodiments thereof, it is to be understood that it is capable of considerable variation and modification without departure from the scope of the appended claims. For example, the water spray nozzle is preferably mounted to the air intake manifold at the cathode but may be provided at any location and at any distance from the cathode, as far as it may supply liquid water to the cathode. When the fuel cell system is installed at factory or home, it may be coupled to waterworks so that city water is supplied to the cathode.

## Claims

1. A fuel cell system comprises one or more of fuel cells each having an anode, a cathode and a polymer electrolyte membrane interposed between said anode and cathode; hydrogen gas supplying means for supplying hydrogen gas including fuel gas to said anode; oxidizer gas supplying means for supplying oxidizer gas to said cathode; and **characterized by** further comprising liquid water supplying means for supplying liquid water to a surface of said cathode, wherein said liquid water supplying means applies water in the liquid state directly to the surface of said cathode to remove latent heat from ambient air and the surface of said cathode.

2. A fuel cell system according to claim 1 wherein said liquid water supplying means sprays water onto the surface of said cathode.

3. A fuel cell system according to claim 1 wherein said liquid water supplying means comprises a nozzle for spraying water onto the surface of said cathode.

4. A fuel cell system according to claim 3 wherein said nozzle is mounted to a gas intake manifold through which said second gas is supplied to said cathode.

5. A fuel cell system according to claim 1, further comprising a connector plate facing toward said cathode and having a plurality of grooves which act as oxidizer gas flow passages, wherein said liquid water supplying means supplys water in the liquid state to said grooves on said connector such that water in the liquid state flows within said grooves.

6. A fuel cell system according to claim 1 wherein said liquid water supplying means supplies liquid water intermittently.

7. A fuel cell system according to any one of claims 1 to 6 which further comprises output sensor for detecting an output voltage between said anode and cathode and water control means for controlling a quantity of water to be supplied by said liquid water supplying means in response to detection by said output sensor.

8. A fuel cell system according to any one of claim 1 to 7 which further comprises water recirculating means for feeding at least a portion of water generated by fuel cell reaction at said cathode back again to said cathode.

9. A fuel cell system according to claim 7 wherein said water recirculating means comprises water collecting means for collecting at least a portion of water generated by fuel cell reaction at said cathode, a water tank for receiving and reserving water collected by said water collecting means and a water feedback passage connected between said water tank and said liquid water supplying means for supplying water in said water tank to said cathode by said liquid water supplying means.

10. A fuel cell system according to any one of claims 1 to 9 wherein said electrolyte membrane has a thickness that allows water produced by fuel cell reaction at said cathode to permeate through said membrane toward said anode.

11. A fuel cell system according to any one of claims 1 to 10 wherein said hydrogen gas supplying means excludes humidifying means that humidifies said hydrogen gas before entering said anode.

12. A fuel cell system according to any one of claims 1 to 11 wherein liquid water supplied by said liquid water supplying means comprises cooling medium for cooling said fuel cells.

13. A fuel cell system according to any one of claims 1 to 12 wherein liquid water supplied by said liquid water supplying means comprises cooling medium for cooling said cathode.

14. A fuel cell system according to any of the preceding claims wherein said cathode is made to prevent water deposition.

15. A fuel cell system according to claim 1 further comprising;
a connector plate facing toward said anode, being provided with a plurality of grooves which act as hydrogen gas flow passages;
wherein said grooves of said cathode extend vertically arid said grooves of said anode extend horizontally.

16. A fuel cell system according to claim 1 further comprising:
a control unit controlling the water spray quantity by calculating an optimum spray water quantity depending on the output power between said cathode and said anode;

17. A fuel cell system according to claim 16 wherein optimum spray water quantity is determined so as to maintain a proper moisture condition of said polymer electrolyte membrane.

18. A fuel cell system according to claim 16 wherein optimum spray water quantity is determined so as to maintain a suitable temperature range of the fuel cells.

19. A fuel cell system according to any of the preceding claims wherein said liquid water supplying means is driven with predetermined constant water pressure over a predetermined time interval.

## Patentansprüche

1. Brennstoffzellensystem mit:
einer oder mehreren Brennstoffzellen, die jeweils eine Anode, eine Kathode und eine zwischen der Anode und der Kathode angeordnete Polymerelektrolytmembran aufweisen;
einer Wasserstoffgaszufuhreinrichtung zum Zuführen von Wasserstoffgas enthaltend Brenngas zur Anode; und
einer Oxidationsgaszufuhreinrichtung zum Zuführen eines Oxidationsgases zur Kathode;
**dadurch gekennzeichnet, daß** das System ferner aufweist:
eine Einrichtung zum Zuführen von flüssigem Wasser zu einer Oberfläche der Kathode;
wobei die Einrichtung zum Zuführen von flüssigem Wasser Wasser in flüssigem Zustand direkt auf die Oberfläche der Kathode aufbringt, um latente Wärme von der Umgebungsluft und der Oberfläche der Kathode zu entziehen.

2. Brennstoffzellensystem nach Anspruch 1, wobei die Einrichtung zum Zuführen von flüssigem Wasser Wasser auf die Oberfläche der Kathode aufsprüht.

3. Brennstoffzellensystem nach Anspruch 1, wobei die Einrichtung zum Zuführen von flüssigem Wasser eine Düse zum Aufsprühen von Wasser auf die Oberfläche der Kathode aufweist.

4. Brennstoffzelle nach Anspruch 3, wobei die Düse auf einem Gaseinlaßverteiler angeordnet ist, über den das Oxidationsgas der Kathode zugeführt wird.

5. Brennstoffzellensystem nach Anspruch 1, ferner mit einer Verbinderplatte, die der Kathode zugewandt ist und mehrere Nuten aufweist, die als Oxidationsgasströmungskanäle dienen, wobei die Einrichtung zum Zuführen von flüssigem Wasser den Nuten auf dem Verbinder Wasser in flüssigem Zustand zuführt, so daß in den Nuten Wasser in flüssigem Zustand fließt.

6. Brennstoffzellensystem nach Anspruch 1, wobei die Einrichtung zum Zuführen von flüssigem Wasser flüssiges Wasser intermittierend zuführt.

7. Brennstoffzellensystem nach einem der Ansprüche 1 bis 6, ferner mit einem Ausgangssensor zum Erfassen einer Ausgangsspannung zwischen der Anode und der Kathode und einer Wassersteuerungseinrichtung zum Steuern einer durch die Einrichtung zum Zuführen von flüssigem Wasser zuzuführenden Wassermenge in Antwort auf ein Erfassungssignal vom Ausgangssensor.

8. Brennstoffzellensystem nach einem der Ansprüche 1 bis 7, ferner mit einer Wasserrückführeinrichtung zum Zurückführen mindestens eines Teils des durch eine Brennstoffzellenreaktion an der Kathode erzeugten Wassers zur Kathode.

9. Brennstoffzellensystem nach Anspruch 7, wobei die Wasserrückführeinrichtung aufweist: eine Wassersammeleinrichtung zum Sammeln mindestens eines Teils des durch die Brennstoffzellenreaktion an der Kathode erzeugten Wassers, einen Wasserbehälter zum Aufnehmen und Speichern von durch die Wassersammeleinrichtung gesammeltem Wasser und einen zwischen dem Wasserbehälter und der Einrichtung zum Zuführen von Wasser verbundenen Wasserrückführkanal zum Zuführen von Wasser im Wassertank durch die Einrichtung zum Zuführen von flüssigem Wasser zur Kathode.

10. Brennstoffzellensystem nach einem der Ansprüche 1 bis 9, wobei die Elektrolytmembran eine Dicke aufweist, gemäß der ermöglicht wird, daß durch die Brennstoffzellenreaktion an der Kathode erzeugtes Wasser die Membran zur Anode hin durchdringt.

11. Brennstoffzellensystem nach einem der Ansprüche 1 bis 10, wobei die Wasserstoffgaszufuhreinrichtung keine Befeuchtungseinrichtung aufweist, die das Wasserstoffgas befeuchtet, bevor es in die Anode eindringt.

12. Brennstoffzellensystem nach einem der Ansprüche 1 bis 11, wobei das durch die Einrichtung zum Zuführen von flüssigem Wasser zugeführte flüssige Wasser ein Kühlmittel zum Kühlen der Brennstoffzellen aufweist.

13. Brennstoffzellensystem nach einem der Ansprüche 1 bis 12, wobei das durch die Einrichtung zum Zuführen von flüssigem Wasser zugeführte flüssige Wasser ein Kühlmittel zum Kühlen der Kathode aufweist.

14. Brennstoffzellensystem nach einem der vorangehenden Ansprüche, wobei die Kathode derart ausgebildet ist, daß verhindert wird, daß sich Wasser daran anlagert.

15. Brennstoffzellensystem nach Anspruch 1, ferner mit einer Verbinderplatte, die der Anode zugewandt ist und mehrere als Wasserstoffgasströmungskanäle dienende Nuten aufweist, wobei die Nuten der Kathode sich vertikal und die Nuten der Anode sich horizontal erstrecken.

16. Brennstoffzellensystem nach Anspruch 1, ferner mit einer Steuereinheit zum Steuern der Wassersprühmenge, durch Berechnen einer optimalen Sprühwassermenge in Abhängigkeit von der Ausgangsspannung zwischen der Kathode und der Anode.

17. Brennstoffzellensystem nach Anspruch 16, wobei die optimale Sprühwassermenge so bestimmt wird, daß ein geeigneter Feuchtigkeitszustand der Polymerelektrolytmembran aufrechterhalten wird.

18. Brennstoffzellensystem nach Anspruch 16, wobei die optimale Sprühwassermenge so bestimmt wird, daß ein geeigneter Temperaturbereich der Brennstoffzellen aufrechterhalten wird.

19. Brennstoffzellensystem nach einem der vorangehenden Ansprüche, wobei die Einrichtung zum Zuführen von flüssigem Wasser über ein vorgegebenes Zeitintervall mit einem vorgegebenen konstanten Wasserdruck betrieben wird.

## Revendications

1. Dispositif de pile à combustible comprenant une ou plusieurs cellules de pile à combustible ayant chacune, une anode, une cathode et une membrane polymère d'électrolyte intercalée entre l'anode et la cathode ; un moyen d'alimentation en hydrogène gazeux pour appliquer de l'hydrogène gazeux contenant du gaz combustible à ladite anode ; un moyen d'alimentation en gaz oxydant pour appliquer un gaz oxydant à ladite cathode ; et **caractérisé en ce qu'**il comprend en outre un moyen d'alimentation en eau pour appliquer de l'eau liquide à la surface de ladite cathode, dans lequel, ledit moyen d'alimentation en eau liquide applique de l'eau à l'état liquide directement sur la surface de ladite cathode afin de dissiper la chaleur latente de l'air ambiant et de la surface de ladite cathode.

2. Dispositif de pile à combustible selon la revendication 1 dans lequel le moyen d'alimentation en eau liquide pulvérise de l'eau sur la surface de ladite cathode.

3. Dispositif de pile à combustible selon la revendication 1 dans lequel ledit moyen d'alimentation en eau liquide comprend une buse pour pulvériser de l'eau sur la surface de ladite cathode.

4. Dispositif de pile à combustible selon la revendication 3 dans lequel ladite buse est montée sur une tubulure d'arrivée de gaz à travers laquelle un second gaz est appliqué à ladite cathode.

5. Dispositif de pile à combustible selon la revendication 1, comprenant encore une plaque de raccordement faisant face à ladite cathode et comprenant une pluralité de rainures servant de passages de circulation d'un gaz oxydant, dans lequel ledit moyen d'alimentation en eau liquide applique de l'eau à l'état liquide auxdites rainures de ladite plaque de raccordement de manière que l'eau à l'état liquide circule dans lesdites rainures.

6. Dispositif de pile à combustible selon la revendication 1 dans lequel ledit moyen d'alimentation en eau liquide applique de l'eau liquide par intermittence.

7. Dispositif de pile à combustible selon l'une quelconque des revendications 1 à 6 qui comprend en outre un capteur de sortie pour détecter une tension de sortie entre ladite anode et ladite cathode et un moyen de commande de l'eau pour commander une quantité d'eau à appliquer par ledit moyen d'alimentation en eau liquide en réponse à la valeur détectée par ledit capteur de sortie.

8. Dispositif de pile à combustible selon l'une quelconque des revendications 1 à 7 qui comprend en outre un moyen de remise en circulation de l'eau pour renvoyer à ladite cathode au moins une partie de l'eau générée par la réaction de la pile à combustible sur ladite cathode.

9. Dispositif de pile à combustible selon la revendication 7 dans lequel ledit moyen de remise en circulation de l'eau comprend un moyen collecteur pour collecter au moins un partie de l'eau générée par la réaction de la pile à combustible sur ladite cathode, un réservoir à eau pour recevoir et garder l'eau collectée par ledit moyen collecteur et un passage de renvoi de l'eau connecté entre ledit réservoir à eau et ledit moyen d'alimentation en eau pour appliquer l'eau contenue dans ledit réservoir à eau à ladite cathode par ledit moyen d'alimentation en eau liquide.

10. Dispositif de pile à combustible selon l'une quelconque des revendications 1 à 9 dans lequel ladite membrane d'électrolyte a une épaisseur qui permet à l'eau produite par la réaction de la pile à combustible sur ladite cathode de pénétrer à travers ladite membrane en direction de ladite anode.

11. Dispositif de pile à combustible selon l'une quelconque des revendications 1 à 10 dans lequel ledit moyen d'alimentation en hydrogène gazeux exclut un moyen d'humidification qui humidifie ledit hydrogène gazeux avant qu'il entre dans ladite anode.

12. Dispositif de pile à combustible selon l'une quelconque des revendications 1 à 11 dans lequel ladite eau liquide appliquée par ledit moyen d'alimentation en eau liquide comprend un milieu réfrigérant pour réfrigérer lesdites cellules de pile à combustible.

13. Dispositif de pile à combustible selon l'une quelconque des revendications 1 à 12 dans lequel l'eau liquide appliquée par ledit moyen d'alimentation en eau liquide comprend un milieu réfrigérant pour refroidir ladite cathode.

14. Dispositif de pile à combustible selon l'une quelconque des revendications précédentes dans lequel ladite cathode est construite de manière à empêcher l'eau de se déposer.

15. Dispositif de pile à combustible selon la revendication 1 comprenant en outre une plaque de raccordement faisant face à ladite anode, étant formée avec une pluralités de rainures qui jouent le rôle de passages de circulation de l'hydrogène gazeux; dans lequel lesdites rainures de ladite cathode s'étendent verticalement et lesdites rainures de ladite anode s'étendent horizontalement.

16. Dispositif de pile à combustible selon la revendication 1 comprenant en outre une unité de commande pour commander la quantité d'eau de pulvérisation grâce au calcul d'une quantité optimale d'eau de pulvérisation qui dépend de la puissance de sortie entre ladite cathode et ladite anode.

17. Dispositif de pile à combustible selon la revendication 16 dans lequel la quantité optimale d'eau de pulvérisation est déterminée de manière à maintenir un état approprié d'humidité de ladite membrane polymère d'électrolyte.

18. Dispositif de pile à combustible selon la revendication 16 dans lequel la quantité optimale d'eau de pulvérisation est déterminée de manière à maintenir une gamme de température convenable des cellules de pile à combustible.

19. Dispositif de pile à combustible selon l'une quelconque des revendications précédentes dans lequel ledit moyen d'alimentation en eau liquide fonctionne avec une pression d'eau constante prédéterminée sur un intervalle de temps prédéterminé.
